(19) Europäisches Patentamt
European Patent Office
Office européen des brevets

(11) **EP 2 267 420 A1**

(12) **EUROPÄISCHE PATENTANMELDUNG**

(43) Veröffentlichungstag:
**29.12.2010 Patentblatt 2010/52**

(51) Int Cl.:
***G01J 3/28*** *(2006.01)*    ***G01N 21/47*** *(2006.01)*
***G01J 3/08*** *(2006.01)*

(21) Anmeldenummer: **10006396.5**

(22) Anmeldetag: **19.06.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **23.06.2009   DE 102009030468**

(71) Anmelder: **Carl Zeiss MicroImaging GmbH**
**Carl-Zeiss-Promenade 10**
**07745 Jena (DE)**

(72) Erfinder:
- **Correns, Nico**
  **99425 Weimar (DE)**
- **Kerstan, Felix**
  **07747 Jena (DE)**

- **Jochmann, Doris**
  **07749 Jena (DE)**
- **Hoyme, Werner**
  **99510 Gebstedt (DE)**
- **Dobschal, Hans-Jürgen**
  **99510 Kleinromstedt (DE)**
- **Seeberg, Marcel**
  **07745 Jena (DE)**
- **Freyta, Lutz**
  **07743 Jena (DE)**

(74) Vertreter: **Loritz, Rainer**
**Carl Zeiss AG**
**Konzernfunktion Recht und Patente**
**Patentabteilung Jena**
**Carl-Zeiss-Promenade 10**
**07745 Jena (DE)**

(54) **Vorrichtung für die optische Spektroskopie und mechanischer Schalter für eine solche Vorrichtung**

(57)    Werden ein Messstrahlengang und ein separater Referenzstrahlengang gemeinsam über einen Y-Lichtleiter in ein Spektrometer eingekoppelt, so sind die Lichtleitwerte des Messstrahlengangs und des Referenzstrahlengangs jedoch niedrig, da die Eintrittsöffnung des Spektrometers jeweils nur anteilig ausgenutzt werden kann. Ein niedriger Lichtleitwert erfordert lange Integrationszeiten. Die Erfindung soll eine Referenzierung und Messung mit hoher Genauigkeit ermöglichen sowie einen mechanischen Schalter mit geringem Prellen angeben.

In einer spektroskopischen Vorrichtung weisen dazu der Referenzstrahlengang (R) und der Messstrahlengang (M) zwischen der Weiche und dem Detektoreingang denselben Lichtleitwert und dieselbe optische Achse auf. So kann die Eintrittsöffnung nahezu vollständig genutzt werden. Bei einem Schalter ist abseits des beweglichen Elements ein zweiter Permanentmagnet derart befestigt, dass in der betreffenden Schaltstellung entgegengesetzte magnetische Pole des ersten Permanentmagneten und des zweiten Permanentmagneten einander berührungslos zugewandt sind und sich bei jeder Auslenkung des beweglichen Elements aus der betreffenden Schaltstellung voneinander entfernen.

Fig. 1A

EP 2 267 420 A1

**Beschreibung**

Die Erfindung betrifft optische Vorrichtungen für die optische Spektrometrie, mit einer Referenzfläche, einer Lichtquelle zur Beleuchtung eines Orts für eine Probe und zur Beleuchtung der Referenzfläche, einem spektral auflösenden Detektor (Spektrometer), einer einem Eingang des Detektors vorgeordneten optischen Weiche, einem Messstrahlengang von dem Probenort zu einem ersten Eingang der Weiche und einem Referenzstrahlengang von der Referenzfläche zu einem zweiten Eingang der Weiche, wobei die Weiche zwischen einer ersten Stellung zur Einkopplung des Messstrahlengangs auf den Detektoreingang und einer zweiten Stellung zur Einkopplung des Referenzstrahlengangs auf den Detektoreingang umschaltbar ist, und mechanische Schalter zur Einstellung einer von mindestens zwei definierten Schaltstellungen eines beweglichen Elements, aufweisend einen Motor und einen Anschlag für das bewegliche Element zur Definition der ersten Schaltstellung, wobei an dem beweglichen Element ein erster Permanentmagnet befestigt ist. Der spektral auflösende Detektor kann einkanalig-abtastend (engl. "scanning") oder simultan mehrkanalig ausgebildet sein.

Die optische Spektrometrie dient zur Charakterisierung des spektralen Reflexions- oder Transmissionsvermögens von Messobjekten über einen interessierenden Wellenlängenbereich, indem ein oder mehrere Reflexions- und/oder Transmissionsintensitätsspektren als sogenannte Strahlungsfunktion erfasst werden. Anhand der Strahlungsfunktion lassen sich Aussagen sowohl über optische als auch nicht-optische Eigenschaften der Messobjekte treffen, welche wiederum zu einer Beurteilung der untersuchten Messobjekte verwendet werden können. Dabei ist die Emissionscharakteristik der Lichtquellen nicht konstant, beispielsweise infolge deren Alterung oder infolge von Schwankungen der Versorgungsspannung oder der Umgebungstemperatur. Auch die spektrale Empfindlichkeitskurve der verwendeten Detektoren variiert mit der Umgebungstemperatur und der Betriebsdauer, ebenso die analoge Detektionselektronik. Eine Spektrometrievorrichtung muss daher kalibriert werden, um reproduzierbare Messwerte zu erhalten. Beispielsweise können dadurch auch mit zwei unterschiedlichen Lichtquellen gemessene Strahlungsfunktionen desselben Messobjekts miteinander verglichen werden. Die Kalibrierung kann beispielsweise anhand eines oder mehrerer Referenzmessobjekte (Standards) erfolgen, die manuell oder automatisch im Messstrahlengang oder anstelle eines Messobjekts am Probenort platziert werden. Zur Kalibrierung wird der Messstrahlengang als Referenzstrahlengang verwendet.

DE 195 28 855 A1 beschreibt eine Vorrichtung, bei der eine erneute Referenzierung zwischen den Messungen mit geringerem Aufwand möglich ist. Zu diesem Zweck wird ein separater Referenzstrahlengang verwendet und der Messstrahlengang über einen Y-Lichtleiter mit dem separaten Referenzstrahlengang zusammengeführt, wobei in jedem Lichtleiterzweig ein schaltbarer Verschluss (engl. "shutter") angeordnet ist. Der Y-Lichtleiter mit den schaltbaren Verschlüssen kann als optische Weiche bezeichnet werden, wobei der Querschnitt des gemeinsamen Strahlengangs zwischen Weiche und Spektrometer aufgeteilt ist auf den Referenzstrahlengang und den Messstrahlengang. Dieser gemeinsame Strahlengang wird in die Eintrittsöffnung des Spektrometers eingekoppelt. Durch den separaten Referenzstrahlengang kann die Vorrichtung schnell referenziert werden, da kein Referenzmessobjekt an den Probenort platziert werden muss (interne serielle Referenzierung). Aufgrund der gemeinsamen Einspeisung in das Spektrometer mittels eines Y-Lichtleiters sind die Lichtleitwerte des Messstrahlengangs und des Referenzstrahlengangs jedoch niedrig, da die Eintrittsöffnung des Spektrometers jeweils nur anteilig ausgenutzt werden kann. Ein niedriger Lichtleitwert erfordert lange Integrationszeiten, was zur Anhäufung von Fehlern führen kann. Aufgrund der anteiligen Nutzung der Eintrittsöffnung sind das Referenzlicht und auch das Messlicht in der Eintrittsöffnung zudem inhomogen verteilt, was die Genauigkeit der Detektion weiter verringert.

Als Alternative zu einer seriellen Referenzierung oder als zusätzliche Maßnahme zur Korrektur kurzfristiger Schwankungen von Vorrichtungseigenschaften ist eine simultane Referenzierung mittels eines zweiten Spektrometers bekannt, beispielsweise aus DE 100 10 213 A1. Dabei müssen Unterschiede zwischen den Mess- und Referenzspektrometern mittels Referenzmessungen kompensiert werden. Der Lichtleitwert ist hier zwar hoch, nachteilig ist aber insbesondere die benötigte größere Anzahl von Spektrometern.

Ein generelles Problem bei spektrometrischen Messungen ist zudem die Abhängigkeit der in Reflexion und/oder Transmission gemessenen Strahlungsfunktionen von den optischen Transmissionseigenschaften der Detektionskanäle, die über den gemessenen Wellenlängenbereich hinweg variieren: Beispielsweise kann es zu Transmissionsänderungen von Lichtleitern infolge mechanischer oder thermischer Beeinflussungen (Signaldrift) kommen, insbesondere zwischen dem Zeitpunkt der Referenzmessung und der eigentlichen Messung. Besonders problematisch sind Unterschiede in der Transmission zwischen Mess- und Referenzstrahlengang, sofern diese separat ausgeführt sind. Diese Probleme bestehen unabhängig davon, ob die Referenzmessung seriell oder simultan erfolgt. In jedem Fall kann dadurch die Messgenauigkeit beeinträchtigt werden.

Bei der Bewegung eines mechanischen Bauteils in eine von mehreren definierten Schaltstellungen besteht das Problem des Zurückprallens von einem betreffenden Anschlag. Es sind diverse Ansätze zum Entprellen von mechanischen Schaltern bekannt. Beispielsweise ist in DE 25 32 563 A1 eine Vorrichtung offenbart, bei der an einem drehbaren Element des Bauteils ein Permanentmagnet befestigt ist, auf den mittels zweier Elektromagnete eine Schaltkraft zur Drehung des Elements zwischen zwei Anschlägen ausgeübt werden kann. Die Elektromagnete selbst dienen dabei als Anschläge. Durch entsprechende Ansteuerung kann ein Zurückprallen des drehbaren Elements verringert oder vollständig vermieden werden. Diese Vorrichtung hat jedoch den Nachteil, dass zwei Elektromagnete erforderlich sind, und dass zum Wechsel der Schaltstellung ein komplexer Steuerungsablauf erforderlich ist.

Der Erfindung liegt daher die Aufgabe zu Grunde, eine Vorrichtung der eingangs genannten Art anzugeben, die eine möglichst geringe Anzahl von Spektrometern erfordern, dabei aber eine Referenzierung und Messung mit hoher Genauigkeit ermöglichen, und einen Schalter der eingangs genannten Art anzugeben, der unter geringem Aufwand ein Umschalten mit vermindertem Zurückprallen zumindest in einer Schaltstellung ermöglicht.

Die Aufgabe wird gelöst durch eine optische Vorrichtung, welche die in Anspruch 1 angegebenen Merkmale aufweist, und durch einen Schalter, welcher die in Anspruch 12 angegebenen Merkmale aufweist.

Vorteilhafte Ausgestaltungen der Erfindung sind in den Unteransprüchen angegeben.

Erfindungsgemäß ist für eine Vorrichtung für die optische Spektrometrie vorgesehen, dass der Referenzstrahlengang und der Messstrahlengang zwischen der Weiche und dem Detektoreingang, insbesondere zwischen dem Weichenausgang und dem Detektor oder zwischen einem Verbindungselement der Strahlengänge und dem Detektor, denselben (einen identischen) Lichtleitwert und dieselbe (eine identische) optische Achse aufweisen. Sie verlaufen also längs desselben optischen Wegs. Die Weicheneingänge und der Weichenausgang können dazu entsprechende Koppeloptiken aufweisen, beispielsweise Linsen oder vorzugsweise abbildende Spiegel. Der Lichtleitwert eines Strahlengangs ist definiert durch das Produkt aus dem von dem Strahlengang eingenommenen Raumwinkel und seiner Querschnittsfläche. Falls der gemeinsame optische Weg von mehreren Lichtleitfasern gebildet wird, gilt die Forderung nach der Identität des Lichtleitwerts und der optischen Achse für jede einzelne Faser.

Der Erfindung liegt die Erkenntnis zugrunde, dass durch Nutzung eines für Referenz- und Messstrahlengang identischen optischen Weges für die Einkopplung zum Detektor zum einen die Eintrittsöffnung nahezu vollständig und gleichmäßig ausgenutzt werden kann, so dass ein maximaler Lichtleitwert bei maximaler Homogenität des übertragenen Lichts erzielt wird. Dies ermöglicht kurze Integrationszeiten. Zum anderen werden Transmissionsunterschiede zwischen Referenz- und Messstrahlengang, die die Messgenauigkeit beeinträchtigen, verringert. Insbesondere thermische oder mechanische Veränderungen beeinflussen im Bereich des identischen optischen Wegs beide Strahlengänge auf dieselbe Weise. Insbesondere erfordert die Erfindung nur ein Spektrometer (pro Spektralbereich).

Je früher der Referenz- und der Messstrahlengang auf den gemeinsamen optischen Weg eingekoppelt werden, desto größer sind diese Vorteile. Vorzugsweise ist daher die Weiche unmittelbar hinter einer Eingangsoptik des Messstrahlengangs angeordnet oder es sind zwischen der Eingangsoptik und der Weiche, insbesondere den Weicheneingängen, ausschließlich Reflektoren angeordnet. Dasselbe gilt für den Referenzstrahlengang.

Insbesondere sind Vorrichtungen bevorzugt, bei denen der Messstrahlengang, insbesondere auch der Referenzstrahlengang, frei von Lichtleitfasern ist. Dadurch werden thermische und mechanische Einflüsse auf die Messgenauigkeit minimiert. Die Vorrichtung ist thermisch und mechanisch höher belastbar. Es entstehen nur geringe Drifts der Signale im Referenz- und Messstrahlengang. Die Vorrichtung weist durchgehend einen hohen Lichtleitwert auf, so dass eine hohe Messgenauigkeit erzielt wird.

Vorteilhafterweise ist die Weiche frei von Lichtleitfasern, denn bei einer Einkopplung mittels Y-Lichtleitfasern werden die Fasern für Referenz- und Messstrahlengang parallel zum Detektor geführt, so dass sie nicht denselben optischen Weg und unterschiedliche optische Achsen aufweisen, woraus die zum Stand der Technik beschriebenen Nachteile resultieren.

Die gesamte Vorrichtung einschließlich der Referenzfläche (interne Referenzierung) ist zweckmäßigerweise mittels eines Gehäuses gegen Umwelteinflüsse verkapselt, lediglich über ein oder zwei Fenster wird dem Licht der Lichtquelle beziehungsweise dem Licht vom Probenort der Übertritt aus dem beziehungsweise in das Gehäuse ermöglicht.

Zur Kompensation von Dunkelströmen und von Empfindlichkeitsvariationen wird zweckmäßigerweise zum einen die Referenzfläche als interner Weiß-Standard und andererseits ein Dunkelzustand referenziert. Die interne Referenzierung des Dunkelzustands gelingt besonders einfach, wenn die Weiche in eine dritte Stellung schaltbar ist, in welcher sie weder den Referenzstrahlengang noch den Messstrahlengang auf den Detektoreingang einkoppelt. Dadurch werden mittels des Detektors beispielsweise ausschließlich dessen Dunkelsignale gemessen.

In einer ersten bevorzugten Ausführungsform weist die Weiche zum Einstellen der drei Weichenstellungen einen mechanischen Schalter auf, der eine Ausnehmung, eine lichtdichte erste Fahne und eine lichtdichte und lichtabsorbierende zweite Fahne aufweist, wobei die Ausnehmung und die Fahnen durch Umschalten des Schalters alternativ in den Messstrahlengang einfahrbar sind. Die Ausnehmung kann auch als Lücke zwischen den beiden Fahnen bezeichnet werden. Dadurch ist nur ein einzelner Schalter zur Einkopplung in einen gemeinsam nutzbaren optischen Weg zum Detektor erforderlich. Vorzugsweise ist hierbei die erste Fahne auf einer Seite verspiegelt (oder mit einem spiegelnden Bauteil versehen), so dass sie im eingefahrenen Zustand einen der Strahlengänge zum Detektoreingang reflektiert und den anderen Strahlengang blockiert, und lässt die Ausnehmung im eingefahrenen Zustand den einen Strahlengang in eine Lichtfalle passieren und den anderen Strahlengang zum Detektor passieren und blockiert die zweite Fahne im eingefahrenen Zustand beide Strahlengänge. Dies ermöglicht eine einfache Konstruktion des Schalters. Beispielsweise sind die Fahnen so in einer Ebene angeordnet, dass die jeweils eingefahrene Fahne bei rechtwinklig zueinander eingehendem Mess- und Referenzstrahlengang den rechten Winkel symmetrisch teilt. Die Fahnen und die Ausnehmung sind vorzugsweise an demselben drehbaren Element angeordnet, so dass nur ein einzelner Antrieb erforderlich ist.

In einer zweiten bevorzugten Ausführungsform ist an dem ersten Lichteingang der Weiche ein erster schaltbarer, optischer Verschluss und dem zweiten Lichteingang ein zweiter schaltbarer, optischer Verschluss angeordnet und die Weiche umfasst einen Strahlteiler mit einem Reflexionsfaktor von weniger als 100%. Dies ermöglicht die Einkopplung in den gemeinsam genutzten optischen Weg mit kostengünstig verfügbaren Komponenten. Durch ein nichtsymmetrisches Teilerverhältnis kann die zum Detektor gelangende Intensität mit geringem Aufwand vorgegeben werden, beispielsweise über die Art und Dicke einer optischen Beschichtung. Die Verschlüsse sind dabei Teil der Weiche und stellen beispielsweise außerdem die Eingänge der Weiche dar.

Besonders bevorzugt sind Ausgestaltungen der Vorrichtung, in denen die Lichtquelle, die Referenzfläche, der Probenort, der Referenzstrahlengang und der Messstrahlengang zur simultanen Lichtführung von dem Probenort bis zu dem ersten Lichteingang und von der Referenzfläche bis zu dem zweiten Eingang angeordnet sind. Dadurch können diese Komponenten ortsfest angeordnet sein, Antriebe sind dafür nicht erforderlich. Die Auswahl zwischen Messung und interner Referenzierung kann alleine mittels der Weiche erfolgen.

Vorzugsweise sind zu diesem Zweck die Referenzfläche und eine Eingangsoptik des Referenzstrahlengangs jeweils gegen von dem Probenort kommendes Licht verschattet, insbesondere durch geneigte Anordnung der Referenzfläche gegenüber dem Licht von dem Probenort und/oder durch zurückspringende Anordnung der Messfläche und/oder der Eingangsoptik. Dies hat den Vorteil, dass von der Probe rückgestreutes Licht nicht in den Referenzstrahlengang gelangen kann, so dass eine Verfälschung der Referenz verhindert wird. Es wird eine möglichst hohe Messgenauigkeit erreicht.

In Weiterbildungen der Vorrichtung, in denen sowohl der Messstrahlengang, optional auch der Referenzstrahlengang, als auch die Weiche frei von Lichtleitfasern sind, können vorteilhafterweise der optische Weg zwischen Weiche und Detektor frei von Lichtleitfasern und der Detektor zusätzlich zur spektralen Auflösung in mindestens einer Dimension räumlich auflösend ausgebildet sein. Durch die faserfreie Ausgestaltung können längs der räumlich auflösenden Dimension mehrere Messpunkte des Probenorts gleichzeitig spektrometrisch vermessen werden.

Erfindungsgemäß ist für einen mechanischen Schalter vorgesehen, dass abseits des beweglichen Elements ein zweiter Permanentmagnet derart befestigt ist, dass in der betreffenden Schaltstellung entgegengesetzte magnetische Pole des ersten Permanentmagneten und des zweiten Permanentmagneten einander berührungslos zugewandt sind und sich bei jeder Auslenkung des beweglichen Elements aus der betreffenden Schaltstellung voneinander entfernen. Die Erfindung umfasst insbesondere einen schaltbaren, optischen Verschluss mit mindestens einer Fahne zum Blockieren eines optischen Strahlengangs, die an dem beweglichen Element eines solchen Schalters befestigt oder einstückig damit ausgebildet ist.

Die Anordnung zweier voneinander beabstandeten, einander anziehenden Permanentmagneten ermöglicht durch die steilen Flanken des magnetischen Potentials aufgrund der bei Auslenkung hohen Rückstellkräfte ein signifikant verringertes Zurückprallen. Bei Verwendung starker Magnete, beispielsweise aus Neodym, ist das Potential im Zentrum zudem sehr tief, so dass die Schaltstellung mit hoher Schärfe definiert werden kann.

Wenn das bewegliche Element ausschließlich drehbar beweglich ist, wird nur ein einziger (bidirektionaler) Antrieb benötigt.

Vorteilhafterweise kann in einer weiteren Schaltstellung abseits des beweglichen Elements ein dritter Permanentmagnet derart befestigt sein, dass in der betreffenden Schaltstellung entgegengesetzte magnetische Pole des ersten Permanentmagneten und des dritten Permanentmagneten einander berührungslos zugewandt sind und sich bei jeder Auslenkung des beweglichen Elements aus der betreffenden Schaltstellung voneinander entfernen. Dies ermöglicht die scharfe Definition einer zweiten Schaltstellung. Entsprechend können weitere Schaltstellungen definiert werden. Zur Unterscheidung der Schaltstellungen kann ein Schrittzähler und/oder ein oder mehrere Positionsgeber verwendet werden. Alternativ kann bei einem rein drehbaren Element mit zwei Schaltstellungen stets in dieselbe Richtung weitergeschaltet werden, so dass sich die beiden Schaltstellungen abwechseln, ohne dass zusätzliche Hilfsmittel erforderlich sind.

Die Erfindung umfasst auch Betriebsverfahren für eine erfindungsgemäße Vorrichtung, einerseits zur Referenzmessung mittels der Referenzfläche als Weiß-Standard und blockierten Referenz- und Messstrahlengängen als Dunkelzustand und andererseits zur Messung unter Anwendung einer solchen Referenzierung, insbesondere mit serieller Zwischenreferenzmessung.

Nachfolgend wird die Erfindung anhand von Ausführungsbeispielen näher erläutert.

In den Zeichnungen zeigen:

Fig. 1 eine schematische Darstellung einer Vorrichtung für die optische Spektrometrie mit einer optischen Weiche, die einen Strahlteilerspiegel umfasst,

Fig. 2 einen alternativen Strahlteiler in schematischer Darstellung,

Fig. 3 schematisch eine lichtleitfaserfreie Vorrichtung mit zweidimensionalem Detektor,

Fig. 4 eine weitere Vorrichtung für die optische Spektrometrie in schematischer Darstellung,

Fig. 5 schematisch eine optische Weiche mit einem einzelnen Schalter mit drei Schaltstellungen und

Fig. 6 verschiedene Ausprägungen für derartige Schalter, jeweils in schematischer Darstellung.

In allen Zeichnungen tragen übereinstimmende Teile gleiche Bezugszeichen.

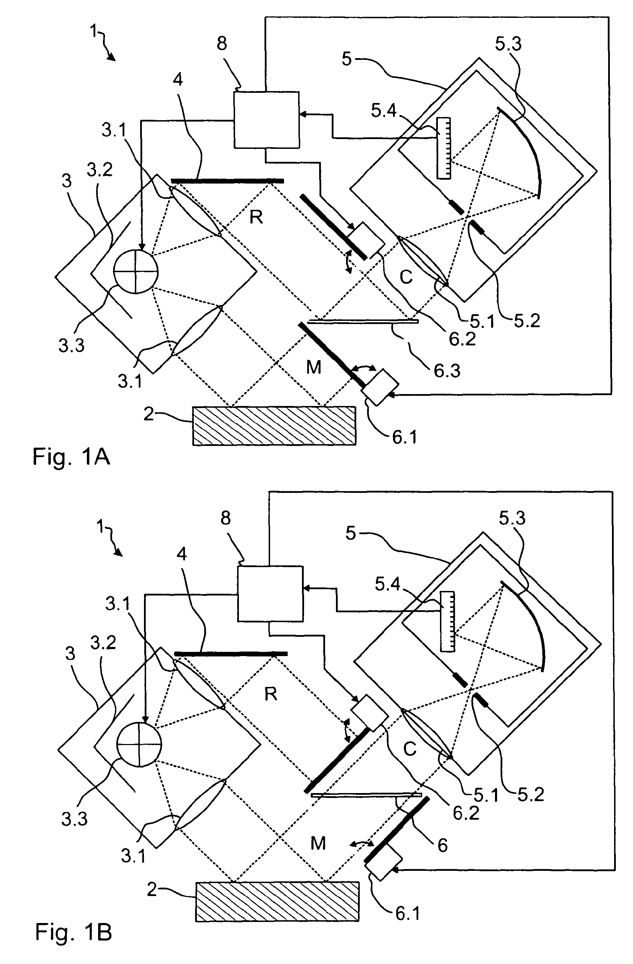

**Fig. 1** zeigt schematisch eine Vorrichtung 1 zur spektrometrischen Untersuchung einer Probe 2 mit einer Beleuchtungseinheit 3, einem Referenzmessobjekt mit einer Referenzfläche 4, einem Spektrometer als Detektor 5, einer optischen Weiche 6 umfassend zwei schaltbare, optische Verschlüsse 6.1, 6.2 als Eingänge der Weiche 6 und einen Strahlteilerspiegel 6.3 sowie mit einer Steuereinheit 8.

Die Beleuchtungseinheit 3 umfasst beispielsweise eine Halogenglühlampe 3.3, einen Reflektor 3.2 und Optiken 3.1 zur kollimierten Beleuchtung der Referenzfläche 4 und der Probe 2 am Probenort. Der Detektor 5 umfasst eine Eingangsoptik 5.1 einen Eintrittsspalt als Eintrittsöffnung 5.2, ein abbildendes Gitter 5.3 und einen zweidimensional ortsauflösenden optoelektronischen Sensor 5.4. Von der Referenzfläche 4 verläuft ein Referenzstrahlengang R zum zweiten Verschluss 6.2, weiter über den Strahlteiler 6.3 und durch die Eingangsoptik 5.1 fokussiert zur Eintrittsöffnung 5.2, von wo einfallendes Licht vom Gitter 5.3 unter räumlichspektraler Aufspaltung längs einer ersten Dimension des Sensors 5.4 auf den Sensor 5.4 abgebildet wird (für eine einzelne Wellenlänge angedeutet). Entsprechend verläuft von dem Probenort (der Probe 2) ein Messstrahlengang M zum ersten Verschluss 6.1, weiter über den Strahlteiler 6.3 und auf demselben optischen Weg wie der Referenzstrahlengang R durch die Eingangsoptik 5.1 zur Eintrittsöffnung 5.2.

Der Strahlteiler 6.3 ist unter 45° zu den Strahlengängen R und M angeordnet, so dass er die Strahlengänge M und R als Verbindungselement prinzipiell verbindet. der Referenzstrahlengang R und der Messstrahlengang M zwischen der Weiche 6 und dem Detektoreingang 5.2 denselben optischen Weg aufweisen. Der Teiler 6.3 weist ein asymmetrisches Teilungsverhältnis von beispielsweise 8:92 (Referenzstrahlengang zu Messstrahlengang) auf. Die Verschlüsse 6.1, 6.2 können von der Steuereinheit 8 alternativ oder gleichzeitig geschlossen werden, so dass nur einer der Strahlengänge M/R zum Detektor 5 gelangt.

Die Messung der Intensitätswerte wird dabei in Abhängigkeit von der Sperrung oder Freigabe der Übertragungswege M/R (Strahlengänge) wie folgt vorgenommen, wobei hier im Ausführungsbeispiel von spektral gemessenen, von der Wellenlänge abhängigen Intensitäten ausgegangen werden soll:

| Intensitätswert | Übertragungsweg R | Übertragungsweg M |
|---|---|---|
| $I_W$ | Freigabe | Sperrung |
| $I_{Wi}$ | Sperrung | Freigabe |
| $I_D$ | Sperrung | Sperrung |
| $I_S$ | Freigabe | Sperrung |
| $I_P$ | Freigabe | Sperrung |

mit:
- $I_W$ der Intensität des vom externen Weißstandard 11 reflektierten Lichts,
- $I_{Wi}$ der Intensität des von der internen Weiß-Referenzfläche 4 reflektierten Lichts,
- $I_D$ der Intensität bei unbeleuchteter Detektoroberfläche,
- $I_S$ der Intensität des vom externen Schwarzstandard 12 reflektierten Lichts, und
- $I_P$ der Intensität des von der Probe 2 reflektierten Lichts.

Für die reflektierten Intensitäten gilt jeweils:

$$I_W = I \cdot \left( R_F + R_W \cdot \left[ 1 - R_F \right]^2 \right) + I_D$$

$$I_S = I \cdot \left( R_F + R_S \cdot \left[ 1 - R_F \right]^2 \right) + I_D$$

$$I_P = I \cdot \left( R_F + R_P \cdot \left[ 1 - R_F \right]^2 \right) + I_D$$

$$I_{Wi} = I_i \cdot R_{Wi} + I_D$$

mit

$I$ :   Intensität des Strahlungsanteils A zum externen Probenort,
$I_i$ :   Intensität des Strahlungsanteils B zur internen Referenzfläche 10,
$R_W$ :   Reflexionsgrad des externen Weißstandards 11,
$R_{Wi}$ :   Reflexionsgrad der internen Weiß-Referenzfläche 4,
$R_S$ :   Reflexionsgrad des externen Schwarzstandards 12,
$R_P$ :   Reflexionsgrad der Probe 2,
$R_F$ :   Reflexionsgrad des Messkopffensters 9.

Die Beleuchtungseinheit 3 beleuchtet beispielsweise permanent die Referenzfläche 4 und simultan die Probe 2. Die Strahlengänge M und R nehmen permanent Licht von der Probe 2 (dem Probenort) beziehungsweise von der Referenzfläche 4 auf und führen es zur Weiche 6. Zur (erstmaligen oder erneuten) internen Weiß-Referenzierung wird hier der erste Verschluss 6.1 am ersten Weicheneingang geschlossen und der zweite Verschluss 6.2 am zweiten Eingang geöffnet (Teilfigur 1A). Zur (erstmaligen oder erneuten) internen Schwarz-Referenzierung werden beide Verschlüsse geschlossen. Die Steuereinheit 8 nimmt in beiden Fällen die Signale (Intensitätswerte) des Sensors 5.4 auf und referenziert anhand dieser Signale die Vorrichtung. Vorzugsweise kann sie dabei Detektorsignale miteinbeziehen, die von einem externen Weiß-Standard und von einem externen Schwarz-Standard stammen und separat wie eine reguläre Messung aufgenommen werden müssen. Zu regulären Messung wird der erste Verschluss 6.1 geöffnet und der zweite Verschluss 6.2 geschlossen (Teilfigur 1B).
Zum Messablauf und zur Ermittlung des Reflexionsgrades wird auf DE 10 2007 061 213 verwiesen, deren Offenbarungsgehalt hier in vollem Umfang miteinbezogen wird.

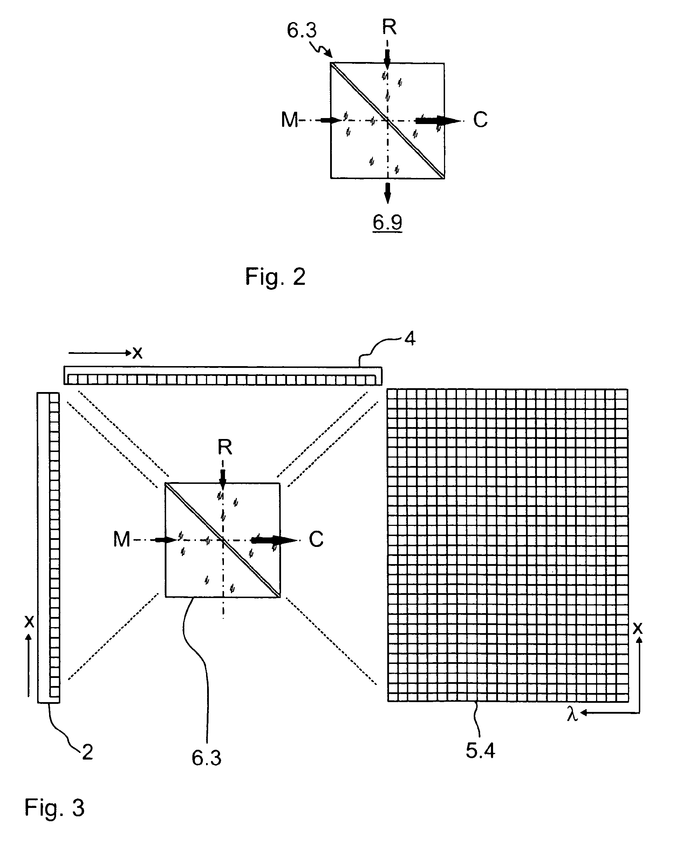

In **Fig. 2** ist eine alternative Ausführungsform für einen Strahlteiler 6.3, die in Vorrichtungen 1 gemäß Fig. 1 und Fig. 3 verwendet werden kann, schematisch abgebildet. Es handelt sich um ein Doppelprisma, bei dem die Strahlteilung an der inneren Grenzfläche erfolgt.
In **Fig. 3** sind der zweidimensionale Sensor 5.4 und eine jeweilige Reihe von simultan messbaren Stellen auf der Probe 2 beziehungsweise während der Referenzierung auf der Referenzfläche 4 dargestellt. Der Übersicht halber sind die Verschlüsse an den Weicheneingängen nicht abgebildet. Längs der ersten Dimension λ des Sensors 5.4 wird das einfallende Licht vom Gitter 5.3 spektral aufgespaltet. Quer dazu wird längs der zweiten Dimension X für jede Messstelle ein eigenes Spektrum auf den Sensor 5.4 abgebildet. Die Matrix von Sensorsignalen wird von der Steuereinheit 8 (hier nicht abgebildet) ausgelesen. Dabei kann je nach Bedarf nur eine einzelne Messstelle X, mehrere oder alle tatsächlich ausgewertet werden.

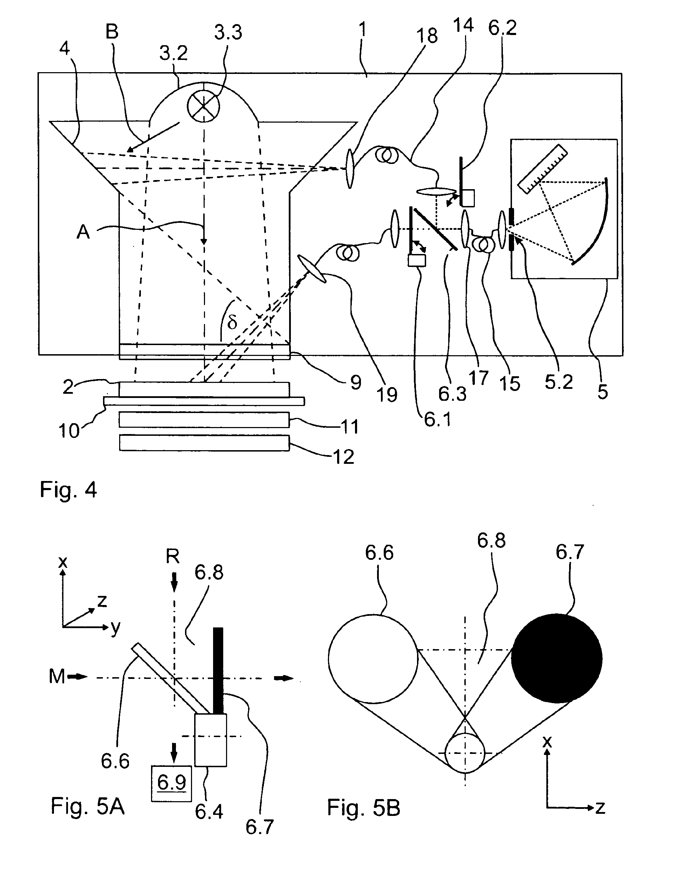

**Fig. 4** zeigt einen geschlossenen Spektrometermesskopf als Vorrichtung 1. Der von einem Gehäuse 30 umgebene Messkopf 1 umfasst eine integrierte Reflektorlampe 3.3, von der ein erster Strahlungsanteil A durch ein beispielsweise rundes Messkopffenster 9 hindurch auf eine Probenhalterung 10 gerichtet ist, die einen Probenort definiert. Die Probenhalterung 10 ist vorgesehen und ausgebildet zur Aufnahme eines externen Weißstandards 11, eines externen Schwarzstandards 12 und einer Probe 2, für die der Reflexionsgrad $R_P$ bestimmt werden soll. Weißstandard 11, Schwarzstandard 12 und Probe 2 sind auf der Probenhalterung 10 positionierbar und dort in einer vorgegebenen Folge gegeneinander austauschbar. Innerhalb des Messkopfes 1 ist ein zweiter Strahlungsanteil B des von der Reflektorlampe 3.3 kommenden Lichts simultan auf eine diffus reflektierende, als Maßverkörperung eines weiteren Weißstandards ausgebildete interne Referenzfläche 4 gerichtet.
Weiterhin sind innerhalb des Messkopfes 1 Lichtwellenleiter 14, 15 und 16 vorgesehen. Dem Lichtwellenleiter 14 ist eine Einkoppeloptik 18 vorgeordnet, die so positioniert ist, dass sie die von der internen Weißfläche 4 gestreut reflektierte Strahlung aufnimmt und in den Lichtwellenleiter 14 einkoppelt. Das mittels der Einkoppeloptik 18 in den Lichtwellenleiter 14 eingekoppelte Licht gelangt zur Lichteintrittsseite eines Verschlusses 6.2 am zweiten Eingang einer optischen Weiche 6 mit einem Strahlteilerspiegel 6.3, deren Lichtaustrittsseite über eine Einkoppeloptik 17 optisch mit dem Lichtwellenleiter 15 verbunden ist. Der Lichtwellenleiter 15 steht mit einem ersten Eintrittsspalt 5.2 eines Spektrometers 5 in Verbindung.

Dem Lichtwellenleiter 16 ist eine Einkoppeloptik 19 vorgeordnet, die zum Aufsammeln von Licht vorgesehen und ausgebildet ist, das von dem Probenort, dort entweder von dem sich auf der Probenhalterung 5 befindenden Weißstandard 6, Schwarzstandard 7 oder der Oberfläche der Probe 8, reflektiert wird und das durch das Messkopffenster 9 in den Messkopf 1 hineingelangt. Das von der Einkoppeloptik 19 in den Lichtwellenleiter 16 eingekoppelte Licht wird innerhalb des Lichtwellenleiters 16 zur Lichteintrittsseite eines ersten Verschlusses 6.1 am ersten Eingang der Weiche 6 fortgeleitet und gelangt bei geöffnetem erstem Verschluss 6.1 von der Lichtaustrittsseite der Weiche 6 über die Einkoppeloptik 17 in den Lichtwellenleiter 15. Der optische Weg des Messstrahlengangs M zwischen dem Strahlteiler 6.3 und dem Detektoreingang 5.2 ist damit derselbe wie der des Referenzstrahlengangs R.

Aus Fig. 4 ist weiterhin ersichtlich, dass die interne Referenzfläche 4 mit der potentiellen Messfläche am Probenort einen Winkel δ einschließt, welcher sicherstellt, dass die interne Referenzfläche 4 zu der Ausbreitungsrichtung des von dem Probenort in die Vorrichtung 1 reflektierten Lichts so geneigt ist und von der Wand 20 des Beleuchtungskanals so zurückspringt, dass dieses Licht nicht auf die interne Referenzfläche 4 treffen kann, aber dennoch eine simultane Beleuchtung durch die Lampe 3.3 und eine simultane Lichtaufnahme in die Strahlengänge M und R möglich ist. Hinter dem Messkopffenster 9 können mehrere Einkoppeloptiken vorzugsweise radialsymmetrisch zur (zirkular um die) Einstrahlrichtung des Lichts auf den Probenort angeordnet sein. Den Einkoppeloptiken ist beispielsweise jeweils ein Lichtwellenleiter nachgeordnet, in welchem von dem Probenort durch das Messkopffenster 9 in den Messkopf 1 hineinreflektiertes und von der Einkoppeloptik aufgesammeltes Licht zur Weiche 6 fortgeleitet wird, von wo es über den gemeinsamen Lichtwellenleiter 15 und den Eintrittsspalt 5.2 über das abbildende Gitter 5.3 zum Sensor 5.4 gelangt.

Referenzierung, Kalibrierung und Messung erfolgen wie zu Fig. 1 beschrieben.

**Fig. 5** zeigt eine optische Weiche 6 mit einem mechanischen Schalter 6.4 mit einem beweglichen Element 6.5, das ausschließlich drehbar gelagert ist. An dem Element 6.5 sind eine erste Fahne 6.6, eine zweite Fahne 6.7 und eine Ausnehmung 6.8 angeordnet, die je nach Schaltstellung im Strahlengang der Weiche 6 liegen. Das bewegliche Element ist zu diesem Zweck mit einem Elektromotor versehen (nicht abgebildet). Die Fahnen stehen dabei unter 45° zu den senkrecht zueinander eingehenden Strahlengängen M und R. Die erste Fahne ist auf der dem Referenzstrahlengang R zugewandten Seite mit einer spiegelnden Oberfläche versehen, so dass Licht aus dem Referenzstrahlengang R zum Detektor 5 reflektiert wird, Licht aus dem Messstrahlengang M aber blockiert (absorbiert oder diffus in den Gesamtaufbau gestreut) wird, wenn sie sich im Strahlengang befindet. Alternativ kann auch die zweite Seite der ersten Fahne verspiegelt sein, um das Licht aus dem Messstrahlengang M in die Lichtfalle 6.9 zu lenken. Die zweite Fahne ist von beiden Seiten lichtundurchlässig und blockiert sowohl Licht aus dem Referenzstrahlengang R als auch Licht aus dem Messstrahlengang M, wenn sie sich im Strahlengang der Weiche 6 befindet. Ist der Schaltet so geschaltet, dass sich anstelle einer der Fahnen die Ausnehmung 6 im Strahlengang der Weiche 6 befindet, so passieren beide Strahlengänge M, R die Weiche ungehindert, wodurch Licht aus dem Messstrahlengang M zum Detektor 5 und Licht aus dem Referenzstrahlengang R in die Lichtfalle 6.9 gelangt.

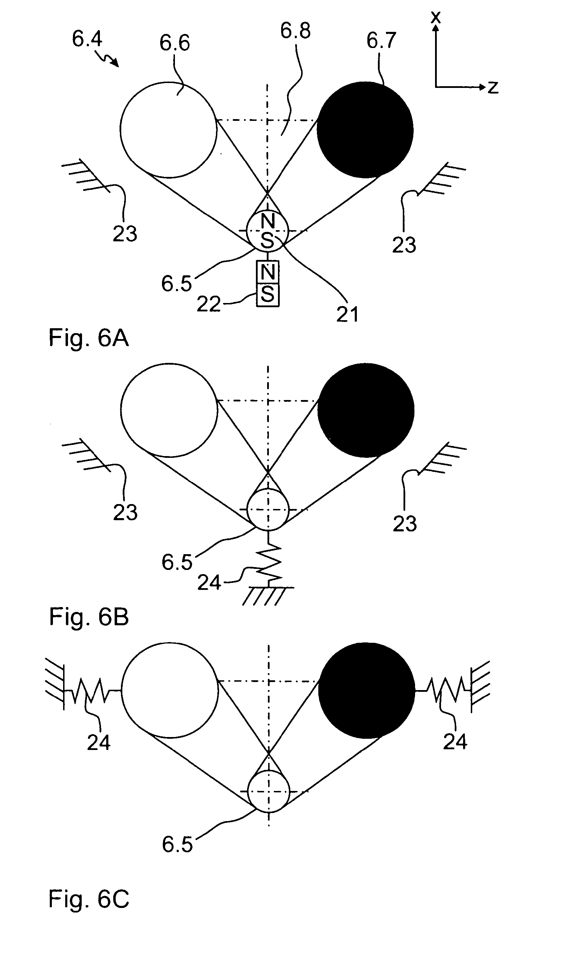

In **Fig. 6** sind mögliche Ausgestaltungen eines mechanischen Schalters 6.4 zur Verwendung in einer Vorrichtung 1 skizziert. An dem beweglichen Element 6.5 sind in allen Fällen wie in Fig. 5 zwei Fahnen 6.6, 6.7 und eine Ausnehmung 6.8 angeordnet. In Teilfigur 6A ist an dem beweglichen Element außer dem Elektromotor ein erster Permanentmagnet 21 befestigt. Die zur Ausnehmung 6.8 gehörende Schaltstellung ist durch einen zweiten Permanentmagneten 22 magnetisch definiert. Die zu den Fahnen 6.6, 6.7 gehörigen Schaltstellungen sind hingegen durch entsprechende Anschläge 23 mechanisch definiert. Nord- und Südpol der beiden Magnete sind einander in der betreffenden Schaltstellung unter einem beispielhaften Abstand von 0,5 mm zugewandt. Sobald das bewegliche Element 6.5 durch den Elektromotor aus der zur Ausnehmung 6.8 gehörigen Schaltstellung ausgelenkt wird, wirkt eine hohe Rückstellkraft auf das Element 6.5, die der Motor überwinden muss. Sobald das magnetische Potential überwunden ist, ist nahezu keine Schaltkraft erforderlich, um eine der beiden anderen Schaltstellungen anzufahren und beizubehalten. Auch in diesen Schaltstellungen ist das Zurückprallen daher deutlich geringer als im Stand der Technik. Umgekehrt verhindert beim Einschalten der zur Ausnehmung 3.8 gehörigen Schaltstellung die hohe Rückstellkraft ein signifikantes Überschwingen und Zurückprallen des Elements 6.5. Diese Schaltstellung wird auch bei stromlosem Motor gehalten. Alternativ oder zusätzlich zu der Schaltstellung der Ausnehmung können auch eine oder beide Schaltstellungen der Fahnen mittels Permanentmagneten definiert sein.

In Teilfigur 6B ist die Magnetenanordnung durch eine herkömmliche Feder 24 ersetzt, die an dem beweglichen Element 6.5 angreift. Diese Variante hat den Nachteil, dass die Rückstellkraft mit zunehmender Auslenkung größer wird. Zwar definiert die Feder die mittlere Schaltstellung, jedoch deutlich unschärfer als in Teilfigur 6A, da das harmonische Potential flacher verläuft. Für die äußeren Schaltstellungen ist eine motorische Schalt- und Haltekraft erforderlich.

Teilfigur 6C zeigt eine weitere Alternative, in der die mittlere Schaltstellung mittels zweier herkömmlicher Federn definiert ist, die jeweils an einer Fahne 6.6 und 6.7 angreifen. Diese Alternative verhält sich wie die in Teilfigur 6B gezeigte, es gibt jedoch keinen Anschlag.

Eine Übersicht von möglichen Varianten für Art der die Ausbildung des gemeinsamen optischen Wegs, des Verbindungselements in der Weiche, für die Art der Auswahl der Strahlengänge M/R, die beispielhaft bei der betreffenden Auswahl zum Detektor gelangende Lichtenergie sowie für die Art der Ausbildung von Referenz- und Messstrahlengang gibt folgende Tabelle (Stellung "Aus" steht für die Blockade beider Strahlengänge M, R als interner Dunkelzustand):

| Variante | Gemeinsamer optischer Weg | Verbindungselement | Lichtauswahl durch | Energie an Det. | Lichtweg |
|---|---|---|---|---|---|
| 1 | Faser | Teiler 6.3 | Verschluss 6.1 | 92% | Faser |
| | | | Verschluss 6.2 | 8% | Faser |
| 2 | Faser | Teiler 6.3 | Verschluss 6.1 | 92% | Faser |
| | | | Verschluss 6.2 | 8% | Freistrahloptik |
| 3 | Faser | Teiler 6.3 | Verschluss 6.1 | 92% | Freistrahloptik |
| | | | Verschluss 6.2 | 8% | Faser |
| 4 | Faser | Teiler 6.3 | Verschluss 6.1 | 92% | Freistrahloptik |
| | | | Verschluss 6.2 | 8% | Freistrahloptik |
| 5 | Freistrahloptik | Teiler 6.3 | Verschluss 6.1 | 92% | Faser |
| | | | Verschluss 6.2 | 8% | Faser |
| 6 | Freistrahloptik | Teiler 6.3 | Verschluss 6.1 | 92% | Faser |
| | | | Verschluss 6.2 | 8% | Freistrahloptik |
| 7 | Freistrahloptik | Teiler 6.3 | Verschluss 6.1 | 92% | Freistrahloptik |
| | | | Verschluss 6.2 | 8% | Faser |
| 8 | Freistrahloptik | Teiler 6.3 | Verschluss 6.1 | 92% | Freistrahloptik |
| | | | Verschluss 6.2 | 8% | Freistrahloptik |
| 9 | Faser | Schalter 6.4 | Stellung M | 100% | Faser |
| | | | Stellung R | 95% | Faser |
| | | | Stellung Aus | 0% | Keiner |
| 10 | Freistrahloptik | Schalter 6.4 | Stellung M | 100% | Freistrahloptik |
| | | | Stellung R | 95% | Freistrahloptik |
| | | | Stellung Aus | 0% | Keiner |

Bezugszeichenliste

1 Vorrichtung zur spektrometrischen Untersuchung

EP 2 267 420 A1

| | |
|---|---|
| 2 | Probe |
| 3 | Beleuchtungseinheit |
| 3.1 | Optik |
| 3.2 | Reflektor |
| 3.3 | Lampe |
| 4 | Referenzfläche |
| 5 | Detektor |
| 5.1 | Eingangsoptik |
| 5.2 | Eintrittsöffnung |
| 5.3 | Abbildendes Gitter |
| 5.4 | Optoelektronischer Sensor |
| 6 | Optische Weiche |
| 6.1 | Erster Verschluss |
| 6.2 | Zweiter Verschluss |
| 6.3 | Strahlteiler |
| 6.4 | Mechanischer Schalter |
| 6.5 | Bewegliches Element |
| 6.6 | Erste Fahne |
| 6.7 | Zweite Fahne |
| 6.8 | Ausnehmung |
| 6.9 | Lichtfalle |
| 7 | |
| 8 | Steuereinheit |
| 9 | Messkopffenster |
| 10 | Probenhalterung |
| 11 | Externer Weißstandard |
| 12 | Externer Schwarzstandard |
| 13 | |
| 14 | Lichtwellenleiter für Referenzlicht |
| 15 | Lichtwellenleiter mit identischem optischem Weg |
| 16 | Lichtwellenleiter für Messlicht |
| 17 | Einkoppeloptik für gemeinsamen optischen Weg |
| 18 | Einkoppeloptik für Referenzstrahlengang |
| 19 | Einkoppeloptik für Messstrahlengang |
| 20 | Wand des Beleuchtungskanals |
| 21 | Erster Permanentmagnet |
| 22 | Zweiter Permanentmagnet |
| 23 | Anschlag |
| 24 | Feder |
| | |
| M | Messstrahlengang |
| R | Referenzstrahlengang |
| C | Gemeinsamer optischer Weg |
| A | Erster Strahlungsanteil |
| B | Zweiter Strahlungsanteil |

**Patentansprüche**

1. Vorrichtung (1) für die optische Spektrometrie, mit einer Referenzfläche (4), einer Lichtquelle (3,3) zur Beleuchtung eines Orts für eine Probe (2) und zur Beleuchtung der Referenzfläche (4), einem spektral auflösenden Detektor (5), einer einem Eingang (5.2) des Detektors vorgeordneten optischen Weiche (6), einem Messstrahlengang (M) von dem Probenort zu einem ersten Eingang der Weiche (6) und einem Referenzstrahlengang (R) von der Referenzfläche (4) zu einem zweiten Eingang der Weiche (6), wobei die Weiche (6) zwischen einer ersten Stellung zur Einkopplung des Messstrahlengangs (M) auf den Detektoreingang (5.2) und einer zweiten Stellung zur Einkopplung des Referenzstrahlengangs (R) auf den Detektoreingang (5.2) umschaltbar ist, **dadurch gekennzeichnet, dass** der Referenzstrahlengang (R) und der Messstrahlengang (M) zwischen der Weiche (6) und dem Detektoreingang (5.2) denselben Lichtleitwert und dieselbe optische Achse aufweisen.

9

**2.** Vorrichtung (1) nach Anspruch 1 oder 2, wobei die Weiche (6) frei von Lichtleitfasern ist.

**3.** Vorrichtung (1) nach Anspruch 1 oder 2, wobei die Weiche (6) unmittelbar hinter einer Eingangsoptik (19) des Messstrahlengangs (M) angeordnet ist oder zwischen der Eingangsoptik (19) und der Weiche (6) ausschließlich ein oder mehrere Reflektoren angeordnet sind.

**4.** Vorrichtung (1) nach Anspruch 1, 2 oder 3, wobei die Weiche (6) in eine dritte Stellung schaltbar ist, in welcher sie weder den Referenzstrahlengang (R) noch den Messstrahlengang (M) auf den Detektoreingang (5.2) einkoppelt.

**5.** Vorrichtung (1) nach Anspruch 4, wobei die Weiche (6) zum Einstellen der drei Weichenstellungen einen mechanischen Schalter (6.4) aufweist, der eine Ausnehmung (6.8), eine lichtdichte erste Fahne (6.6) und eine lichtdichte und lichtabsorbierende zweite Fahne (6.7) aufweist, wobei die Ausnehmung (6.8) und die Fahnen (6.6, 6.7) durch Umschalten des Schalters (6.4) alternativ in den Messstrahlengang (M) einfahrbar sind.

**6.** Vorrichtung (1) nach Anspruch 5, wobei die erste Fahne (6.6) auf einer Seite verspiegelt ist, so dass sie im eingefahrenen Zustand einen der Strahlengänge (R, M) zum Detektoreingang (5.2) reflektiert und den anderen Strahlengang (M, R) blockiert, und die Ausnehmung (6.8) im eingefahrenen Zustand den einen Strahlengang (R, M) in eine Lichtfalle passieren und den anderen Strahlengang (M, R) zum Detektor (5) passieren lässt und die zweite Fahne (6.7) im eingefahrenen Zustand beide Strahlengänge (R, M) blockiert.

**7.** Vorrichtung (1) nach Anspruch 4, wobei an dem ersten Lichteingang der Weiche (6) ein erster schaltbarer, optischer Verschluss (6.1) und dem zweiten Lichteingang ein zweiter schaltbarer, optischer Verschluss (6.2) angeordnet ist und die Weiche (6) einen Strahlteiler (6.3) mit einem Reflexionsfaktor von weniger als 100% umfasst, insbesondere mit asymmetrischem Teilerverhältnis.

**8.** Vorrichtung (1) nach einem der vorhergehenden Ansprüche, wobei die Lichtquelle (3.3), die Referenzfläche (4), der Probenort, der Referenzstrahlengang (R) und der Messstrahlengang (M) zur simultanen Lichtführung von dem Probenort bis zu dem ersten Lichteingang und von der Referenzfläche (4) bis zu dem zweiten Eingang angeordnet sind.

**9.** Vorrichtung (1) nach Anspruch 8, wobei die Referenzfläche (4) und eine Eingangsoptik (18) des Referenzstrahlengangs (R) jeweils gegen von dem Probenort kommendes Licht verschattet sind, insbesondere durch geneigte Anordnung der Referenzfläche (4) gegenüber dem Licht von dem Probenort und/oder durch zurückspringende Anordnung der Messfläche (4) und/oder der Eingangsoptik (18).

**10.** Vorrichtung nach einem der vorhergehenden Ansprüche, wobei der Messstrahlengang (M), insbesondere auch der Referenzstrahlengang (R), frei von Lichtleitfasern (16, 14) ist.

**11.** Vorrichtung nach Anspruch 3 und Anspruch 10, wobei der optische Weg zwischen Weiche (6) und Detektor (5) frei von Lichtleitfasern (15) und der Detektor (5) zusätzlich zur spektralen Auflösung in mindestens einer Dimension räumlich auflösend ausgebildet ist.

**12.** Mechanischer Schalter (6.4), insbesondere für eine Vorrichtung (1) nach einem der vorhergehenden Ansprüche, zur Einstellung einer von mindestens zwei definierten Schaltstellungen eines beweglichen Elements (6.5), aufweisend einen Antrieb und einen ersten Permanentmagneten (21), der an dem beweglichen Element (6.5) befestigt ist, **dadurch gekennzeichnet, dass** abseits des beweglichen Elements (6.5) ein zweiter Permanentmagnet (22) derart befestigt ist, dass in der betreffenden Schaltstellung entgegengesetzte magnetische Pole des ersten Permanentmagneten (21) und des zweiten Permanentmagneten (22) einander berührungslos zugewandt sind und sich bei jeder Auslenkung des beweglichen Elements (6.5) aus der betreffenden Schaltstellung voneinander entfernen.

**13.** Mechanischer Schalter (6.4) nach dem vorhergehenden Anspruch, wobei das bewegliche Element (6.5) ausschließlich drehbar beweglich ist.

**14.** Mechanischer Schalter (6.4) nach Anspruch 11 oder 12, wobei in einer weiteren Schaltstellung abseits des beweglichen Elements ein dritter Permanentmagnet (22) derart befestigt ist, dass in der betreffenden Schaltstellung entgegengesetzte magnetische Pole des ersten Permanentmagneten (21) und des dritten Permanentmagneten (22) einander berührungslos zugewandt sind und sich bei jeder Auslenkung des beweglichen Elements (6.5) aus der betreffenden Schaltstellung voneinander entfernen.

**15.** Optischer Verschluss (6.1, 6.2) mit mindestens einer Fahne (6.6, 6.7) zum Blockieren eines optischen Strahlengangs (R, M), die an dem beweglichen Element (6.5) eines mechanischen Schalters (6.4) nach Anspruch 12 oder 13 befestigt oder einstückig damit ausgebildet ist.

Fig. 1A

Fig. 1B

EP 2 267 420 A1

6.3
R

M

C

6.9

Fig. 2

4

x

R

M

C

x

λ

x

2

6.3

5.4

Fig. 3

13

Fig. 4

Fig. 5A

Fig. 5B

Fig. 6A

Fig. 6B

Fig. 6C

**Europäisches Patentamt**
**European Patent Office**
**Office européen des brevets**

## EUROPÄISCHER RECHERCHENBERICHT

**Nummer der Anmeldung**

EP 10 00 6396

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2005/006590 A1 (HARRISON DALE A [US]) 13. Januar 2005 (2005-01-13) * Abbildung 32 * ----- | 1-11 | INV. G01J3/28 G01N21/47 G01J3/08 |
| X | US 2007/236692 A1 (SCHEBESTA WILHELM [DE] ET AL) 11. Oktober 2007 (2007-10-11) * Abbildung 1 * ----- | 1 | |
| A | DE 12 59 698 B (BOSCH ELEKTRONIK GMBH; PHOTOKINO G M B H) 25. Januar 1968 (1968-01-25) * Abbildungen 6-8 * ----- | 5,6 | |
| A,P | DE 10 2007 061213 A1 (ZEISS CARL MICROIMAGING GMBH [DE]) 25. Juni 2009 (2009-06-25) * Abbildung 1 * ----- | 8-11 | |

| | | | RECHERCHIERTE SACHGEBIETE (IPC) |
|---|---|---|---|
| | | | G01J G01N |

Der vorliegende Recherchenbericht wurde für alle Patentansprüche erstellt

| Recherchenort | Abschlußdatum der Recherche | Prüfer |
|---|---|---|
| München | 15. November 2010 | Rödig, Christoph |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................
& : Mitglied der gleichen Patentfamilie, übereinstimmendes Dokument

EPO FORM 1503 03.82 (P04C03)

Europäisches
Patentamt

European
Patent Office

Office européen
des brevets

**Nummer der Anmeldung**

EP 10 00 6396

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☒ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

1-11

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

**Europäisches Patentamt**
**European Patent Office**
**Office européen des brevets**

## MANGELNDE EINHEITLICHKEIT
## DER ERFINDUNG
## ERGÄNZUNGSBLATT B

**Nummer der Anmeldung**

EP 10 00 6396

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-3

   Anordnung einer Weiche innerhalb einer Spektrometrievorrichtung
   ---

2. Ansprüche: 1, 4-7

   Ausgestaltung einer optischen Weiche
   ---

3. Ansprüche: 1, 8-11

   Anordnung von Messfläche und Referenzfläche in einer Spektrometrievorrichtung
   ---

4. Ansprüche: 12-15

   Mechanischer Schalter
   ---

**EP 2 267 420 A1**

## ANHANG ZUM EUROPÄISCHEN RECHERCHENBERICHT
## ÜBER DIE EUROPÄISCHE PATENTANMELDUNG NR.

EP 10 00 6396

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-11-2010

| Im Recherchenbericht angeführtes Patentdokument | Datum der Veröffentlichung | Mitglied(er) der Patentfamilie | Datum der Veröffentlichung |
|---|---|---|---|
| US 2005006590 A1 | 13-01-2005 | US 2009002711 A1<br>US 2010051822 A1 | 01-01-2009<br>04-03-2010 |
| US 2007236692 A1 | 11-10-2007 | DE 102004048102 A1<br>EP 1740928 A1<br>WO 2005106431 A1<br>JP 2007535667 T | 20-04-2006<br>10-01-2007<br>10-11-2005<br>06-12-2007 |
| DE 1259698 B | 25-01-1968 | AT 271204 B<br>CH 452350 A<br>US 3497295 A | 27-05-1969<br>31-05-1968<br>24-02-1970 |
| DE 102007061213 A1 | 25-06-2009 | EP 2235503 A1<br>WO 2009077110 A1 | 06-10-2010<br>25-06-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19528855 A1
- DE 10010213 A1
- DE 2532563 A1
- DE 102007061213